# EUROPÄISCHE PATENTSCHRIFT

(11) **EP 0 792 921 B1**
(45) Veröffentlichungstag und Bekanntmachung des Hinweises auf die Patenterteilung: **17.12.2003**
(21) Anmeldenummer: 97103300.6
(22) Anmeldetag: 28.02.1997
(51) Int. Cl.: C09D 5/03, B32B 15/08

(54) **Pulverlack für Verpackungsbehälter**
Powder paint for packaging containers
Peinture en poudre pour boîtes de conditionnement

(30) Priorität: 01.03.1996 DE 19607914
(43) Veröffentlichungstag der Anmeldung: 03.09.1997
(73) Patentinhaber: PPG Industries Ohio, Inc., Cleveland, OH 44111 (US)
(72) Erfinder: Kiriazis, Leonidas Dr., 48151 Münster (DE)
(74) Vertreter: Sternagel, Fleischer, Godemeyer & Partner Patentanwälte

(56) Entgegenhaltungen:
- WO-A-92/10551
- FR-A- 2 083 108
- FR-A- 2 283 935

## Beschreibung

Die vorliegende Erfindung betrifft einen Pulverlack, der sich insbesondere als Überzug für Verpackungsbehälter eignet.

Für die Beschichtung von Verpackungsbehältern werden heute vorzugsweise Flüssiglacke verwendet. Diese verursachen zahlreiche Umweltprobleme aufgrund ihres Lösemittelgehaltes. Dies gilt auch für die Fälle des Einsatzes von Wasserlacken.

Es wird daher verstärkt versucht, diese Lacke durch lösungsmittelarme bzw. lösemittelfreie zu ersetzen. So werden beispielsweise zur Abdeckung von Dosenschweißnähten vielfach schon thermoplastische Pulverlacke eingesetzt. Diese Produkte werden durch teure Kaltvermahlung aus den entsprechenden Thermoplasten hergestellt.

Weiterhin sind aus der EP-B 119 164 duroplastische Pulverlacke für die Schweißnahtdeckung von Metallbehältern, die zur Aufnahme von Lebensmitteln oder Getränken eingesetzt werden, bekannt. Diese duroplastischen Pulverlacke enthalten als Bindemittel ein Gemisch aus einem aromatischen Epoxidharz mit im Mittel maximal 2 Epoxidgruppen pro Molekül und aus einem aromatischen Epoxidharz mit im Mittel mehr als 2 Epoxidgruppen pro Molekül. Als Härter wird das Kondensationsprodukt des Bisphenol-A-Diglycidylethers mit Bisphenol A und/oder ein saurer Polyester auf der Basis Trimellithsäureanhydrid/aliphatisches Polyol eingesetzt. In der EP-B-119 164 sind jedoch keine Angaben über geeignete Teilchengrößen und Korngrößenverteilungen der Pulverlacke enthalten. Nachteilig ist außerdem, daß diese Pulverlacke nur zur Schweißnahtabdeckung geeignet sind.

Aus der EP-B-10 805 sind Pulverlacke für die Innenbeschichtung von Dosen bekannt, die einen Polyester mit endständigen Carboxylgruppen und einer OH-Zahl kleiner-10 mg KOH/g sowie ein Epoxidharz enthalten. Als Härtungskatalysator enthalten diese Pulverlacke Cholinderivate. Die Pulverlacke weisen eine mittlere Teilchengröße zwischen 20 und 150 µm auf. In der EP-B-10 805 sind jedoch keine Hinweise enthalten, wie Doseninnenbeschichtungen erhalten werden können, die auch bei Schichtdicken ≤ 15 µm geschlossene Filme liefern. Außerdem weisen diese Pulverlacke - bedingt durch die niedrige OH-Zahl des Polyesters - den Nachteil einer nur schlechten Vernetzung auf. Entsprechend weist dieses System für die Praxis nicht akzeptable Trocknungszeiten von 10 bis 40 min bei 150 bis 220 °C auf, während die Trocknungszeit moderner Fabrikationsanlagen bei maximal 20 bis 30 s bei einer Objekttemperatur von 260 bis 280 °C liegt.

Aus der US-PS-4,497,837 sind Pulverlacke für die Innenbeschichtung von Dosen und Dosendeckeln bekannt, die ein Epoxidharz und aromatische Amine, Lewis-Säuren oder Säureanhydride als Härter enthalten. Die Pulverlacke weisen eine mittlere Teilchengröße zwischen 20 und 150 µm, bevorzugt 30 bis 70 µm auf. Nachteilig bei diesen Systemen ist die hohe Mindestschichtdicke von 38 µm zur Erzielung von Beschichtungen mit einer nicht zu großen Porigkeit. Außerdem weisen diese Pulverlacke den Nachteil auf, daß zur Aushärtung der beschriebenen Systeme Ofenverweilzeiten zwischen 5 und 12 min. erforderlich sind.

Weiterhin sind aus der US-PS 3,962,486 Pulverlacke für die Innenbeschichtung von Dosen bekannt, die ebenfalls ein Epoxidharz und aromatische Amine, Epoxi-Amin-Addukte oder Säureanhydride enthalten. Durch Anwendung des Plasma-Sprühbeschichtungsverfahrens sind Beschichtungen herstellbar, die bereits bei geringen Schichtdicken von weniger als 13 µm die Anforderungen erfüllen, die üblicherweise an Innenbeschichtungen von Lebensmittelverpackungen gestellt werden. Damit die Applizierbarkeit mittels des Plasma-Sprühverfahrens gewährleistet ist, dürfen nur Pulverlacke eingesetzt werden, die eine maximale Teilchengröße ≤ 100 µm sowie eine ausreichend niedrige Schmelzviskosität aufweisen.

Die Verwendung aminischer Härter führt jedoch zu einer unzureichenden Sterilisationsbeständigkeit der resultierenden Beschichtungen. Nachteilig ist ferner, daß mit Aminen gehärtete Epoxidharze zur Versprödung neigen und sehr schlechte Elastizitäten haben. Säureanhydrid-Härter weisen den Nachteil auf, daß sie stark reizend sind und daher bei der Formulierung der Pulverlacke besondere Vorsichtsmaßnahmen erforderlich sind.

Schließlich sind aus der US-PS 4,183,974 Pulverlacke für die Innenbeschichtung von Dosen bekannt, die ein Epoxidharz und einen Aminhärter enthalten. Diese Pulverlacke weisen mittlere Teilchengrößen zwischen 1 und 100 µm, bevorzugt zwischen 1 und 10 µm auf. Die resultierenden Beschichtungen weisen zwar bereits bei Schichtdicken von ≤ 13 µm die geforderte geringe Porosität auf, jedoch sind die resultierenden Beschichtungen verbesserungsbedürftig. Nachteilig ist ferner, daß mit Aminen gehärtete Epoxidharze zur Versprödung neigen und sehr schlechte Elastizitäten haben.

Beschichtungen aus Pulverlacken für Konservendosen sind ferner auch aus den deutschen Patentanmeldungen P 40 38 681.3 und P 42 04 266.6 bekannt.

Die Ergebnisse mit Pulverlacken sind insgesamt bisher nicht zufriedenstellend, insbesondere sind zur Erzielung eines gleichmäßigen Aussehens erhöhte Schichtdicken erforderlich. Außerdem sind beim Aufbrechen sog. Doppeldosen, die für Konservendosen hergestellt werden, die Bruchkanten des Lacks nicht zufriedenstellend.

Die vorliegende Erfindung hat sich demgemäß die Aufgabe gestellt, einen Pulverlack für die Innenbeschichtung von Verpackungsbehältern, insbesondere Konservendosen, zur Verfügung zu stellen, die die eingangs geschilderten Nachteile nicht mehr aufweist.

Die Aufgabe wird dadurch gelöst, daß
1) der Pulverlack für die Innenbeschichtung von Verpackungsbehältern mit einer Schichtdicke von ≤ 15 µm,
   A) mindestens einen thermoplastischen Kunststoff, aus gewählf aus der Gruppe bestehend aus Polyurethanen, Polyethylenen und Polyamiden,
   B) ggfs. mindestens einen duroplastischen Kunststoff, vorzugsweise ein Epoxidharz mit einem Epoxiäquivalentgewicht von 400 bis 3000,
   C) ggf. Pigmente, Füller, Katalysatoren, pulverlacktypische Additive wie Entgasungsmittel, Verlaufsmittel, Radikalfänger, Antioxidantien enthält und
2) der Pulverlack eine derartige Korngrößenverteilung aufweist, daß
   a) mindestens 90 Massenprozent der Pulverlackteilchen eine Teilchengröße zwischen 1 und 120 µm aufweisen,
   b) die maximale Teilchengröße der Pulverlackteilchen für mindestens 99 Massenprozent der Teilchen ≤ 150 µm beträgt und
   c) die mittlere Teilchengröße der Pulverlackteilchen zwischen 1 und 60 µm, vorzugsweise 1 und 30 µm liegt.

Der Anteil der Komponente A) liegt erfindungsgemäß bei 60 bis 90, vorzugsweise 70 bis 80 Gew.-%, der der Komponente B) bei 0 bis 20, vorzugsweise 10 bis 15 Gew.-% und der der Komponente C) bei 10 bis 20, vorzugsweise 10 bis 15 Gew.-%.

Außerdem betrifft die Erfindung ein Verfahren zur Innenbeschichtung von Verpackungsbehältern, bei denen diese Pulverlacke appliziert werden.

Gegenstand der Erfindung ist schließlich auch die Verwendung der Pulverlacke zur Innenbeschichtung von Verpackungsbehältern.

Es ist überraschend und war nicht vorhersehbar, daß Korngrößen im Bereich < 30 µm mit den genannten thermoplastischen Pulverlacken erzielbar sind, indem die o.g. Mischung mit duroplastischen Kunststoffen verwendet wird. und daß das Eigenschaftsprofil und somit der Anwendungszweck von Pulverlacken gezielt durch Einstellung einer speziellen Korngrößenverteilung gesteuert werden kann. Dabei sind die erfindungsgemäßen Pulverlacke schnell aushärtbar, einfach zu handhaben und einfach zu applizieren.

Außerdem zeichnen sich die erfindungsgemäßen Pulverlacke dadurch aus, daß Beschichtungen mit nur einer sehr geringen Schichtdicke von ≤ 15 µm die von den Dosenherstellern für Innenbeschichtungen geforderten Eigenschaften aufweisen. Insbesondere weisen diese Beschichtungen selbst bei einer geringen Schichtdicke von ≤ 15 µm die geforderte geringe Porosität auf. Ferner zeichnen sich diese Beschichtungen durch eine gute Haftung, hohe Flexibilität und eine gute Pasteurisations- und Sterilisationsbeständigkeit aus.

Erfindungsgemäß verwendbare thermoplastische Kunststoffe sind Polymere, Copolymere, Terpolymere, Pfropfpolymere und Ionomere, ausgewählt aus Polyurethane, Polyamide und Polyethylene

Erfindungsgemäß einsetzbar sind insbesondere Kunststoffe auf Basis von Polyurethan, die ein oder mehrere Polyesterdiole mit einem Molekulargewicht von 600 bis 1200, vorzugsweise 800 bis 1000 enthalten. Als Polyesterdiole kommen vor allen Dingen Polybutandioladipate, Polyethylenglykol oder Gemische hiervon in Betracht.

Zur Herstellung der thermoplastischen Polyurethane werden die Aufbaukomponenten in Gegenwart von gegebenenfalls Katalysatoren, Hilfsmitteln und/oder Zusatzstoffen in solchen Mengen zur Reaktion gebracht.

Geeignete Katalysatoren, welche insbesondere die Reaktion zwischen den NCO-Gruppen der Diisocyanate und den Hydroxylgruppen der Aufbaukomponenten und beschleunigen, sind die nach dem Stand der Technik bekannten und üblichen tertären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutzylzinndilaurat oder ähnliche. Die Katalysatoren werden üblicherweise in Mengen von 0,002 bis 0,1 Teilen pro 100 Teile Polyhydroxylverbindung eingesetzt.

Neben Katalysatoren können den thermoplastischen Kunststoffen (A) auch Hilfsmittel und/oder Zusatzstoffe einverleibt werden. Genannt seien beispielsweise Gleitmittel, Inhibitoren, Stabilisatoren gegen Hydrolyse, Licht, Hitze oder Verfärbung, Farbstoffe, Pigmente, Antioxidantien und/oder Radikalfänger, Verstärkungsmittel und Weichmacher.

Nähere Angaben über die oben genannten Hilfsmittel- und Zusatzstoffe sind der Fachliteratur, beispielsweise der Monographie von J.H.Saunders und K.C. Frisch "High Polymers", Band XVI, Polyurethane, Teil 1 und 2, Verlag Interscience Publishers 1962 bzw. 1996, dem vorgenannten Kunststoff-Handbuch, Band VII, Polyurethane oder der DE-OS 29 01774 zu entnehmen.

Vorzugsweise Anwendung finden thermoplastische Polyurethane mit einer Shore A-Härte von 70 bis 95 und solche mit einer Shore D-Härte von 54 bis 80, die hergestellt werden durch Umsetzung von Polyoxytetramethylenglykol oder Alkandiol-polyadipaten mit 2 bis 6 C-Atomen im Alkylenrest, linearen aliphatischen und/oder cycloaliphatischen Diisocyanaten, z.B. Hexamethylendiisocyanat-1,6 oder 4,4-Dicyclohexylmethan-diisocyanat, und/oder aromatischen Diisocyanaten z.B. 4,4'-Diphenylmethandiisocyanat und Butandiol-1,4 im Äquivalenzverhältnis von NCO-: OH-Gruppen von 1: 0,95 bis 1:0,5.

Erfindungsgemäß werden besonders Polyethylenverbindungen bevorzugt, die z.B. unter der Bezeichnung Lupolen^{R} (zu beziehen über die BASF AG) zu erhalten sind. Derartige Polyethylene können durch radikalische Polymerisation von Ethylen bei hohen Drücken (1500 bis 3000 bar) oder durch koordinative Polymerisation mit Hilfe von Katalysatoren bei niedrigen Drücken hergestellt werden. Je nach den Polymerisationsbedingungen entstehen Polymere unterschiedlicher Dichte (0,90 bis 0,97 g/cm³) und unterschiedlicher molarer Masse. Üblicherweise sind. Polyethylene durch Dichten und Schmelzindizes charakterisiert. Durch Polymerisation von Ethylen mit polaren Monomeren, wie Vinylacetat, Acrylaten, Acrylsäure oder unpolaren α-Olefinen wie Buten (-1), Hexen (-1) usw. können Copolymerisate mit gezielten Veränderungen der Polymerstruktur erhalten werden. Erfindungsgemäß bevorzugt werden solche Polyethylene, die durch Niederdruckpolymerisation entstehen, wie beispielsweise das oben zitierte Lupolen.

Die Polyethylene sind teilkristalline Kunststoffe. In Abhängigkeit von den Polymerisationsbedingungen entstehen Polyethylene mit unterschiedlichem Verzweigungsgrad. Je weniger verzweigt die Makromoleküle sind, desto höher ist der kristalline Anteil und damit auch die Dichte. Die Höhe des kristallinen Anteils und die Kristallitdicken bestimmen das Aufschmelzverhalten, d.h. die Schmelztemperatur und die Schmelzwärme der Polyethylene. Die mechanischen Eigenschaften hängen unmittelbar von der Kristallinität und Dichte sowie von der molaren Masse ab. Steifigkeit und Härte nehmen mit steigender Dichte zu. Bei den Copolymeren nehmen Steifigkeit und Härte mit wachsendem Comonomergehalt infolge sinkender Kristallinität ab. Dementsprechend sind erfindungsgemäß die Verzweigungsgrade und der kristalline Anteil derart zu steuern, daß die bevorzugten Härtebereiche erreicht werden.

Die erfindungsgemäß einsetzbaren Copolymeren, Terpolymeren, Pfropfcopolymeren und Ionomeren sind mit der Maßgabe verwendbar, daß sie Carboxyl- oder Anhydridgruppen oder Gruppen, die zu Carboxylgruppen hydrolysierbar sind, aufweisen und daß der Schmelzindex der Polymeren gemessen bei 190°C und einer Belastung von 2,16 kg zwischen 0,1 und 30 g/10 min, bevorzugt zwischen 0,2 und 25 g/10 min und besonders bevorzugt zwischen 0,5 und 20 g/10 min liegt.

Geeignete Co- bzw. Terpolymere sind herstellbar durch Copolymerisation von Ethylen und α, β-ungesättigten Carbonsäuren wie z.B. Acrylsäure, Methacrylsäure, Itaconsäure, Crotonsäure, Isocrotonsäure, Maleinsäure und Fumarsäure, den entsprechenden Anhydriden oder den entsprechenden Estern oder Halbestern mit 1 bis 8 C-Atomen im Alkoholrest wie z.B. Methyl-, Ethyl-, Propyl-, Butyl-, Pentyl-, Hexyl-, Cyclohexyl-, Heptyl-, Octyl- und 2-Ethylhexylester der aufgeführten Säuren. Ebenfalls einsetzbar sind auch die entsprechenden Salze der aufgeführten Carbonsäuren, etwa die Natrium-, Kalium-, Lithium-, Magnesium-, Calcium, Zink- und Ammoniumsalze. Bevorzugt eingesetzt werden die Carbonsäuren und ihre Anhydride.

Weiterhin können bei der Copolymerisation noch weitere, mit Ethylen und den ungesättigten Carbonylverbindungen copolymerisierbare Monomere eingesetzt werden. Geeignet sind beispielsweise α-Olefine mit 3 bis 10 C-Atomen, Vinylacetat und Vinylpropionat.

Die Mengen der eingesetzten Monomeren werden dabei so gewählt, daß das entsprechende Polymer einen Carboxylgruppengehalt von 0,1 bis 30 Gew.-%, bevorzugt 2 bis 20 Gew.-%, aufweist und daß der Gehalt an Ethyleneinheiten im Polymer bis zu 99,9 Gew.-%, bevorzugt zwischen 75 und 95 Gew.-%, beträgt.

Geeignete Pfropfcopolymere sind herstellbar durch Pfropfung von mindestens einem Polymeren aus der Gruppe der Polyolefine mit bis 10 Gew.-%, bevorzugt bis zu 5 Gew.-%, bezogen auf das Gesamtgewicht der Monomeren, mindestens eines Monomeren aus der Gruppe der α, β-ungesättigten Carbonsäuren, deren Anhydride, deren Estern oder Salzen in Gegenwart oder Abwesenheit von Peroxiden.

Die eingesetzten Ionomeren sind herstellbar durch die bereits oben beschriebene Copolymerisation von Ethylen und ggf. weiteren Monomeren mit Salzen α, β-ungesättigten Carbonsäuren oder durch partielle Neutralisation von den bereits oben beschriebenen carbonsäurehaltigen Co-, Ter- und Pfropfpolymeren mit Salzen, Oxiden und Hydroxiden von Natrium, Kalium, Lithium, Magnesium, Calcium, Zink und Ammonium. Die Neutralisation kann in der Schmelze oder in der Lösung durchgeführt werden. Die Menge an basischer Verbindung wird dabei so gewählt, daß der Neutralisationsgrad des Polymers zwischen 0,1 und 99 %, bevorzugt zwischen 0,1 und 75 % und ganz besonders bevorzugt zwischen 0,1 und 40 % liegt.

Die in den erfindungsgemäßen Pulverlacken eingesetzten duroplastischen Kunststoffe (B) sind vorzugsweise Epoxidharze, insbesondere in Kombination mit Polyethylenen oder Polyestern. Hierbei handelt es sich insbesondere um feste Epoxidharze mit einem Epoxidäquivalentgewicht von 400 bis 3000, vorzugsweise 600 bis 800, besonders bevorzugt 700 bis 800. Geeignet sind aromatische, aliphatische und/oder cycloaliphatische Epoxidharze. Bevorzugt werden aromatische Epoxidharze auf Basis Bisphenol-A und/oder Bisphenol-F und/oder Epoxidharze vom Novolak-Typ eingesetzt. Besonders bevorzugt eingesetzte Epoxidharze auf Basis Bisphenol-A oder Bisphenol-F weisen ein Epoxidäquivalentgewicht von 500 bis 2000 auf. Besonders bevorzugt eingesetzte Epoxidharze vom Novolak-Typ weisen ein Epoxidäquivalentgewicht von 500 bis 1000 auf. Epoxidharze auf Basis Bisphenol-A bzw. Bisphenol-F weisen dabei im allgemeinen eine Funktionalität von maximal 2 und Epoxidharze vom Novolak-Typ eine Funktionalität von im allgemeinen mindestens 2 auf. Jedoch können auch die Epoxidharze auf Basis Bisphenol-A bzw. Bisphenol-F durch Verzweigung, z.B. mittels Trimethylolpropan, Glycerin, Pentaerythrit oder anderer Verzweigungsreagenzien, auf eine Funktionalität von mehr als 2 gebracht werden.

Selbstverständlich können auch andere Epoxidharze, wie z.B. Alkylenglykoldiglycidylether oder deren verzweigte Folgeprodukte, mit Alkylenglykolen flexibilisierte Epoxidharze auf Basis Bisphenol-A bzw. -F o.ä. eingesetzt werden. Ferner sind auch Mischungen verschiedener der genannten Epoxidharze geeignet.

Geeignete Epoxidharze sind beispielsweise die unter folgendem Namen im Handel erhältlichen Produkte: Epikote® 154, 1001, 1002, 1055, 1004, 100.7, 1009, 3003-4F-10 der Firma Shell-Chemie, XZ 86 795 und DER® 664, 667, 669, 662, 642U und 672U der Firma Dow sowie Araldit®, GT 6064, GT 7072, GT 7203, GT 7004, GT 7304, GT 7097 und GT 7220 der Firma Ciba Geigy.

In den duroplastischen Komponenten (B) der Pulverlacke können Härterkomponenten vorhanden sein, bzw. diesen zugesetzt werden. Diese werden üblicherweise in einer Menge von 10 bis 50 Gew.-%, bevorzugt von 15 bis 40 Gew.-%, jeweils bezogen auf das Gesamtgewicht der Komponente (B) eingesetzt.

Als Härterkomponente geeignet sind alle festen Verbindungen mit mehr als einer phenolischen OH-Gruppe, bevorzugt 1,8 bis 4 und besonders bevorzugt ≤ 3 phenolische OH-Gruppen pro Molekül und einem Hydroxyl-Äquivalentgewicht, bezogen auf OH-Gruppen von 100 bis 500, bevorzugt 200 bis 300.

Bevorzugt werden als Härter solche auf Basis Bisphenol-A und/oder Bisphenol-F eingesetzt. Besonders bevorzugt wird als Härter das Kondensationsprodukt des Diglycidylethers von Bisphenol-A bzw. Bisphenol-F mit Bisphenol-A bzw. Bisphenol-F, insbesondere das Kondensationsprodukt mit einem auf phenolische Hydroxylgruppen bezogenen Äquivalentgewicht von 220 bis 280. Diese Kondensationsprodukte werden üblicherweise hergestellt durch Umsetzen von i.a. überschüssigem Bisphenol mit einem Bisphenol-Diglycidylether in Gegenwart eines geeigneten Katalysators. Bevorzugt wird das Kondensationsprodukt hergestellt durch Umsetzen des Diglydidylethers mit dem Bisphenol im Gewichtsverhältnis von 0,5 bis 2. Diese Härter auf der Basis dieser Kondensationsprodukte des Bisphenol-Diglycidylethers mit einem Bisphenol weisen im allgemeinen eine Funktionalität von maximal 2 auf, wobei durch Verwendung von Verzweigungsreagenzien wiederum höhere Funktionalitäten eingestellt werden können.

Als Härter geeignet sind ferner auch die Umsetzungsprodukte von Bisphenolen mit Epoxidharzen vom Novolak-Typ. Bevorzugt werden diese Härter durch Umsetzen des Epoxidharzes mit dem Bisphenol im Gewichtsverhältnis von 0,5 bis 2 in Gegenwart eines geeigneten Katalysators erhalten.

Geeignet sind beispielsweise die in der DE-PS 23 12 409 in Spalte 5, Zeile 2 bis Spalte 6, Zeile 55 beschriebenen phenolischen Härter.

Eingesetzt werden können ferner auch die in der DE-OS 30 27 140 beschriebenen phenolischen Härter.

Selbstverständlich sind auch mit Verzweigungsreagenzien modifizierte Härter und/oder flexibilisierte Härter geeignet. Ferner können auch Mischungen von verschiedenen der genannten Härter eingesetzt werden. Bevorzugt werden dabei FDA-zugelassene Härter eingesetzt.

Beispiele für derartige handelsübliche hydroxylgruppenhaltige Härter, die bevorzugt eingesetzt werden, sind die unter den folgenden Namen im Handel erhältlichen Produkte: Härter XB 3082 der Firma Ciba Geigy und Epikure® 169 und 171 der Firma Shell-Chemie.

Als weitere Komponente können die erfindungsgemäßen Pulverlacke mindestens einen Härtungskatalysator enthalten, üblicherweise in einer Menge von 0,01 bis 5,0 Gew.-%, bevorzugt von 0,05 bis 2,0 Gew.-%, jeweils bezogen auf das Gesamtgewicht des Pulverlacks.

Vorteilhafterweise ist der Katalyator Imidazol, 2-Methylimidazol, Ethyltriphenylphosphoniumchlorid oder ein anderes Salz desselben, ein Chinolinderivat, wie beispielsweise in der EP-B-10805 beschrieben, ein primäres, sekundäres oder tertiäres Aminophenol, Aluminiumacetylacetonat oder ein Toluolsulfonsäuresalz oder eine Mischung aus verschiedenen der genannten Katalysatoren.

Üblicherweise enthalten die im Handel erhältlichen hydroxylgruppenhaltigen Härter bereits einen Härtungskatalysator.

Außerdem können die duroplastischen Pulverlacke gemäß Komponente (B) ggf. noch Hilfsmittel und Additive enthalten. Beispiele hierfür sind die für die Komponente (A) aufgezählten Stoffe.

Weiterhin können die erfindungsgemäßen Pulverlacke mit den Komponenten (A) und (B) noch 0 bis 55 Gew.-%, bevorzugt 15 bis 25 Gew.-%, Füllstoffe enthalten. Bevorzugt werden FDA-zugelassene Füllstoffe eingesetzt. Im allgemeinen werden anorganische Füllstoffe, beispielsweise Titandioxid, wie z.B. Kronos 2160 der Firma Kronos Titan, Rutil R 902 der Firma Du Pont und RC 566 der Firma Sachtleben, Bariumsulfat und Füllstoffe auf Silikat-Basis, wie z.B. Talkum, Kaolin, Magnesiumaluminiumsilikate, Glimmer u.ä. eingesetzt. Bevorzugt werden Titandioxid und Füllstoffe vom Quarzsand-Typ eingesetzt.

Außerdem können die erfindungsgemäßen Pulverlacke mit den Komponenten (A) und ggf. (C) ggf. noch 0,01 bis 10 Gew.-%, bevorzugt 0,1 bis 2 Gew.-%, bezogen auf das Gesamtgewicht des Pulverlacks, weitere Hilfsund Zusatzstoffe enthalten. Beispiele hierfür sind Verlaufsmittel, Rieselhilfen, Entlüftungsmittel, wie z.B. Benzoin, Pigmente o.ä..

Für die Verwendung als Innenbeschichtung von Verpackungsbehältern sind insbesondere Pulverlacke mit den Komponenten (A), ggf. (B) und ggf. (C) geeignet, die sowohl nur einen geringen Anteil an sehr feinen Partikeln (Teilchengröße < 5 µm) sowie gleichzeitig auch nur einen sehr geringen Anteil an grobteiligen Pulverlackpartikeln (Teilchengröße ≥ 25 µm) aufweisen, d.h. eine möglichst enge Korngrößenverteilung aufweisen.

Für die Verwendung zur Innenbeschichtung der Verpackungsbehälter wird die Korngrößenverteilung so eingestellt, daß mindestens 90 Massenprozent der Pulverlackteilchen eine Teilchengröße zwischen 1 und 120 µm aufweisen. Vorzugsweise weisen 90 Massenprozent der Pulverlackteilchen eine Teilchengröße zwischen 1 und 40 µm und besonders bevorzugt zwischen 5 und 25 µm auf. Die maximale Teilchengröße der Pulverlackteilchen beträgt für mindestens 99 Massenprozent der Teilchen ≤ 150 µm, bevorzugt ≤ 60 µm, und besonders bevorzugt < 40 µm. Die mittlere Teilchengröße der Pulverlackteilchen liegt zwischen 1 bis 30 µm, besonders bevorzugt zwischen 2 bis 12 µm. Die Beschichtungen selbst weisen bei einer geringen Schichtdicke von ≤ 15 µm die geforderte geringe Porosität auf. Außerdem zeichnen sich diese Beschichtungen durch eine gute Haftung, hohe Flexibilität und eine gute Pasteurisations- und Sterilisationsbeständigkeit aus.

Weiterhin ist es erfindungswesentlich, daß bei Verwendung der Pulverlacke zur Innenbeschichtung der Verpackungsbehälter die Korngrößenverteilung so eingestellt wird, daß die Steilheit S der Kornverteilungskurve im Wendepunkt ≥ 100, bevorzugt ≥ 150 und besonders bevorzugt ≥ 200 ist. Zur Erzielung von Beschichtungen mit besonders guten Eigenschaften werden ganz besonders bevorzugt Pulverlacke eingesetzt, bei denen die Steilheit S der Korngrößenverteilungskurve im Wendepunkt ≥ 300 ist. Allerdings steigen die Fertigungskosten der Pulverlacke mit zunehmender Steilheit stark an.

Die Steilheit S ist dabei definiert als Grenzwert für f(x₂) - f(x₁) gegen Null von (f(x₂) - f(x₁))/1g ((x₂/x₁)) am Wendepunkt der Kornverteilungskurve. Die Kornverteilungskurve stellt dabei die Auftragung der kumulierten Massenprozente (f(x)) gegen den absoluten Korndurchmesser (x) dar, wobei der Korndurchmesser im logarithmischen Maßstab und die kumulierten Massenprozente im linearen Maßstab dargestellt sind. Für die Verwendung als Innenbeschichtung von Verpackungsbehältern sind somit insbesondere Pulverlacke geeignet, die sowohl nur einen geringeren Anteil an sehr feinen Partikeln (Teilchengröße 5 µm) sowie gleichzeitig auch nur einen sehr geringen Anteil an grobteiligen Pulverlackpartikeln (Teilchengröße > 25 µm) aufweisen, d.h. eine möglichst enge Korngrößenverteilung aufweisen.

Für die Verwendung als Schweißnahtabdeckung wird die Korngrößenverteilung (b) so eingestellt, daß mindestens 90 Massenprozent der Pulverlackteilchen eine Teilchengröße zwischen 1 und 100 µm aufweisen. Bevorzugt werden Pulverlacke eingesetzt, bei denen mindestens 90 Massenprozent der Pulverlackteilchen eine Teilchengröße zwischen 5 und 100 µm aufweisen. Die maximale Teilchengröße der Pulverlackteilchen beträgt für mindestens 99 Massenprozent der Teilchen ≤ 150 µm, bevorzugt ≤ 100 µm. Die mittlere Teilchengröße (c) der Pulverlackteilchen liegt bevorzugt zwischen > 20 und 60 µm, besonders bevorzugt zwischen 25 und 40 µm. Für die Verwendung zur Schweißnahtabdeckung sind daher prinzipiell auch die für die Innenbeschichtung der Verpackungsbehälter eingesetzten Pulverlacke geeignet. Bevorzugt werden für die Verwendung zur Schweißnahtabdeckung aber Pulverlacke eingesetzt, die einen höheren Anteil grobteiliger Pulverlackpartikel enthalten.

Der erfindungsgemäße Pulverlack weist vorzugsweise eine Glasübergungstemperatur von > 40°C auf.

Gegenstand der vorliegenden Erfindung ist schließlich auch ein Verfahren zur Herstellung der beschriebenen Pulverlacke für die Beschichtung von Verpackungsbehältern.

Die Herstellung der festen Pulverlacke mit den Komponenten (A) und ggf. (B) sowie ggf. (C) erfolgt nach bekannten Methoden (vgl. z,.B. Produkt-Information der Firma BASF Lacke + Farben AG, "Pulverlacke", 1990) durch Homogenisieren und Dispergieren, beispielsweise mittels eines Extruders, Schneckenkneters u.ä.. Nach Herstellung der Pulverlacke werden diese durch Vermahlen und ggf. durch Sichten und Sieben für die Dispergierung vorbereitet. Ebenso kommen die Sprühtrocknungsverfahren in Betracht.

Für die Herstellung der thermoplastischen Kunststoffe werden ein Polyamid oder ein Polyurethan oder ein Polyethylen vermahlen, so daß mindestens 90 Massenprozent der Pulverlackteilchen eine Teilchengröße zwischen 1 und 120 µm aufweisen, die maximale Teilchengröße der Pulverlackteilchen für mindestens 99 Massenprozent der Teilchen ≤ 150 µm beträgt, die mittlere Teilchengröße der Pulverlackteilchen zwischen 1 und 60 µm vorzugsweise 1 und 30 µm, liegt. Besonders bevorzugt werden Korngrößen, die mindestens 90 Massenprozent der Pulverlackteilchen eine Teilchengröße zwischen 1 und 40 µm aufweisen, die maximale Teilchengröße der Pulverlackteilchen für mindestens 99 Massenprozent der Teilchen ≤ 60 µm beträgt, die mittlere Teilchengröße der Pulverlackteilchen zwischen 2 und 12 µm liegt. Ganz besonders bevorzugt werden Korngrößen mit mindestens 90 Massenprozent der Pulverlackteilchen eine Teilchengröße zwischen 5 und 25 µm aufweisen, die maximale Teilchengröße der Pulverlackteilchen für mindestens 99 Massenprozente der Teilchen ≤ 40 µm beträgt, die mittlere Teilchengröße der Pulverlackteilchen zwischen 2 und 12 µm liegt.
In derselben Weise erfolgt die Herstellung der duroplastischen Kunststoffe. Erfindungsgemäß können diese zusammen mit den thermoplastischen Kunststoffen oder getrennt vermahlen werden.

Nach dem Vermahlen werden erfindungsgemäß ggf. Pigmente, Füller, Katalysatoren, pulverlacktypische Additive wie Entgasungsmittel, Verlaufsmittel, Radikalfänger, Antioxidantien zugesetzt. Vorzugsweise geschieht dies in Mengen von 15 bis 10 Gew.-%.

Die Verpackungsbehälter, die mit den erfindungsgemäßen Pulverlacken beschichtet werden, können aus den unterschiedlichsten Materialien bestehen, unterschiedlichste Größen und Formen aufweisen sowie nach verschiedenen Verfahren hergestellt worden sein. Insbesondere werden aber mit den erfindungsgemäßen Pulverlackdispersionen metallische Behälter beschichtet. Diese Metallbehälter können dadurch hergestellt worden sein, daß zunächst Metallblech gerollt und dann durch Umkanten verbunden wurde. An dem so entstandenen Zylinder können dann die Endstücke befestigt werden. Die erfindungsgemäßen Pulverlacke werden sowohl für die Abdeckung der Schweißnaht als auch für die Innenbeschichtung der Dosenrümpfe, die im allgemeinen bereits einen Boden haben, eingesetzt.

Ferner können auch tiefgezogene Metallbehälter innen mit den erfindungsgemäßen Pulverlacken beschichtet werden. Selbstverständlich sind die Pulverlacke aber auch für die Beschichtung von Dosendeckeln und Dosenböden geeignet.

Die Verpackungsbehälter können aus den unterschiedlichsten Materialien bestehen, wie beispielsweise Aluminium, Schwarzblech, Weißblech und verschiedene Eisenlegierungen, die ggf. mit einer Passivierungsschicht auf Basis von Nickel-, Chrom- und Zinnverbindungen versehen sind. Behälter dieser Art werden üblicherweise als Behälter für Nahrungsmittel und Getränke verwendet, etwa für Bier, Säfte, Limonaden, Suppen, Gemüse, Fleischgerichte, Fischgerichte, Gemüse, aber auch z.B. für Tierfutter.
Die Applikation erfolgt nach bekannten Methoden, wie sie beispielsweise in der US-PS 4,183,974 beschrieben sind. Die elektrostatische Aufladung der Pulverlackteilchen erfolgt dabei durch Reibung (Triboelektrizität). Die Applikation der Pulverlackteilchen erfolgt mit Hilfe von speziellen, dem Fachmann bekannten Sprühköpfen. Die vorliegende Erfindung betifft dahen auch einen Schichtstoff aus einem Substrat, vorzugsweise Metall einem darauf aufgebrachten erfindungsgemäßen Pulverlack und ggf. eim darauf geschrchteten Kunststoffolie, sowie die Verwendung dieses Schichtstoffs zur Herstellung von Verpackungsbehältern.

Für die Innenbeschichtung der Verpackungsbehälter werden die Pulverlacke in einer Schichtdicke ≤ 15 µm, bevorzugt von 10 bis 14 µm aufgebracht. Selbst bei diesen geringen Schichtdicken erfüllen die Beschichtungen die üblicherweise an derartige Filme gestellten Anforderungen. Selbstverständlich können die Pulverlacke aber auch in höheren Schichtdicken aufgebracht werden. Für die Abdeckung von Schweißnähten können die Pulverlacke üblicherweise in einer Schichtdicke von ≤ 200 µm, bevorzugt ≤ 80 µm aufgebracht werden.

Der Verpackungsbehälter, dessen Schweißnaht oder Innenseite mit dem erfindungsgemäßen Pulverlack versehen worden ist, wird anschließend zur Härtung des Pulverlackes einer Hitzebehandlung unterworfen. Diese Hitzebehandlung kann auf verschiedene Weise erfolgen. In der Praxis werden die Behälter hierzu häufig durch einen Durchlaufofen befördert. Die Pulverlacke härten dabei im allgemeinen bei Objekttemperaturen zwischen 180-240 ° C innerhalb einer Zeit von 5-15 s vollständig aus. Dabei kann der Durchlaufofen bei konstanter Temperatur betrieben werden oder ein Temperaturprofil aufweisen, das nach den jeweiligen Gegebenheiten eingestellt wird.

Bei der Verwendung zur Schweißnahtabdeckung weisen die erfindungsgemäßen Beschichtungen eine hohe Flexibilität auf, so daß die Schweißnahtabdeckung Verformungen des Verpackungsbehälters bei der Weiterverarbeitung ohne Ablösung oder Rißbildung folgen kann. Vorteilhaft ist ferner, daß gute Sterilisationsbeständigkeiten erzielt werden und bei Einsatz für Doppeldosen die Bruchkanten des Lacks sich gezielt einstellen lassen.

Erfindungsgemäß kann die Pulverlackschicht zusätzlich mit einer Kunststoffolie beschichtet werden, vorzugsweise mit einer Polypropylendeckschicht.

Die verwendeten Polypropylene sind Polypropylen-Random-Copolymerisate jeweils in Form einer Folie oder eines Films. Dabei kann es sich auch um zusammengesetzte Folien und Filme (Verbundfolie und -filme) handeln, die beispielsweise erhalten werden durch gemeinsames Extrudieren verschiedener Polypropylen-Random-Copolymerisate. Derartige Polypropylenfolien werden nach bekannten Verfahren (Blasverfahren, Chillroll-Verfahren etc.) aus Granulaten der Polypropylene gefertigt.

Erfindungsgemäß sind zur Herstellung der Polypropylenfolien der Polypropylenfolie-Haftvermittler-Metall-Verbunde statistische Polypropylen-Copolymerisate geeignet, die erhalten werden durch statistische Copolymerisation von 90 bis 99 Gew.-%, bevorzugt 93 bis 99 Gew.-%, Propylen und 1 bis 10 Gew.-%, bevorzugt 1 bis 7 Gew.-%, jeweils bezogen auf das Monomerengesamtgewicht, Comonomeren. Die statistischen Copolymere haben eine Molmassenverteilung M_{w} : Mₙ im Bereich von 2 bis 10, bevorzugt 3 bis 6, und einen Schmelzindex MFI 230 °C/2,16 kg im Bereich von 1 bis 20 g/10 min, bevorzugt im Bereich von 4 bis 15 g/10 min (gemessen nach DIN 53 735). Derartige Polypropylene sowie Verfahren zu deren Herstellung sind bekannt. Sie sind beispielsweise herstellbar durch das in der DE-A-37 30 022 beschriebene Polymerisationsverfahren unter Verwendung eines Ziegler-Natta-Katalysatorsystems. Die Propylencopolymerisate sind beispielsweise in einem Gasphasenpolymerisationsverfahren bei Temperaturen von 20 bis 160 °C und bei einem Druck von 1 bis 100 bar herstellbar. Die Molekulargewichte der Polymerisate lassen sich durch allgemein bekannte Maßnahmen regeln, zum Beispiel mittels Reglern, wie beispielsweise Wasserstoff.

Geeignete Comonomere sind beispielsweise C₂ - und C₄ bis C₁₂ - α - Monoolefine, insbesondere C₂ - und C₄ -bis C₆ - α-Monoolefine, wie Ethen, Buten-1, 4-Methylpenten-1, Hexen-1, n-Okten-1, n-Decen-1 und n-Dodecen-1.

Als besonders geeignet zu nennen sind dabei Polypropylen-Random-Copolymerisate aus 1 bis 4 Gew.-% Ethylen und 99 bis 96 Gew.-% Propylen, jeweils bezogen auf das Gesamtgewicht der Monomerenzusammensetzung, wobei die Random-Copolymerisate eine Molmassenverteilung M_{w} : Mₙ im Bereich von 3 bis 6 und einen Schmelzindex MFI 230 °C/2,16 kg im Bereich von 5 bis 9 g/10 min (gemessen nach DIN 53 735) aufweisen. Diese Polypropylen-Copolymerisate haben einen Schmelzbereich von ca. 135 bis 155°C (ermittelt durch DSC). Bei Verwendung von Kunststoffolien auf Basis derartiger Polypropylene werden Kunststoffolie-Metall-Laminate erhalten, die keinerlei Weißbruch aufweisen.

Besonders bevorzugt sind weiterhin Polypropylen-Random-Copolymerisate aus 90 bis 97 Gew.-% Propylen, 2 bis 5 Gew.-% Ethylen und 1 bis 6 Gew.-% Buten-1, jeweils bezogen auf das Gesamtgewicht der Monomeren, die eine Molmassenverteilung M_{w} : Mₙ im Bereich von 3 bis 6 und einen Schmelzindex MFI 230 °C/2,16 kg im Bereich von 4 bis 8 g/10 min aufweisen. Derartige Polypropylen-Random-Copolymerisate haben einen Schmelzbereich von 120 °C bis 140 °C (ermittelt durch DSC). Die Kunststoffolien, die aus diesen Polypropylenen erhältlich sind, führen zu Kunststoffolie-Metall-Laminaten, die ebenfalls keinerlei Weißbruchneigung aufweisen.

Alle angegebenen Werte für den Schmelzindex MFI beziehen sich auf die Messung gemäß DIN 53735.

Die zur Herstellung der erfindungsgemäßen Kunststoff-Metall-Verbunde verwendeten Polypropylen-Copolymerisate sind beispielsweise erhältlich unter der Handelsbezeichnung Novolen® 3225 MCX und Novolen® 3520 LX der Firma BASF AG.

Selbstverständlich können auch Mischungen der genannten Polypropylen-Copolymerisate, bevorzugt 1 : 1 Mischungen, zusammen zu einer Folie extrudiert werden.

Gemäß der vorliegenden Erfindung kann das zur Herstellung der Polypropylenfolie verwendete Polypropylen-Random-Copolymerisat bis zu 50 Gew.- % ersetzt werden durch Polypropylen-Homopolymerisat. In diesem Fall wird also eine Mischung aus statistischem Polypropylen-Copolymerisat und aus Polypropylen-Homopolymerisat zu einer Polypropylenfolie extrudiert. Wenn in der Kunststoffmischung mehr als 50 Gew.-% Polypropylen-Homopolymerisat verwendet wird, weisen die daraus hergestellten Metall-Kunststoff-Laminate eine gewisse Weißbruchneigung auf. Geeignete Propylen-Homopolymerisate haben eine Molmassenverteilung M_{w} : Mₙ im Bereich von 2 bis 10, einen Schmelzindex MFI 230 °C/2,16 kg im Bereich von 1 bis 20 g/10 min (gemessen nach DIN 53 735) und einen Isotaxie-Index im Bereich von 80 bis 99 %, bevorzugt 90 bis 98 %.

Vorzugsweise wird eine Mischung aus dem beschriebenen statistischen Polyproplyen-Copolymerisat und einem Polypropylen-Homopolymerisat mit einer Molmassenverteilung M_{w} :Mₙ im Bereich von 3 bis 6 und einem Schmelzindex MFI 230 °C/2,16 kg im Bereich von 4 bis 15 g/10 min eingesetzt (gemessen nach DIN 53735). Der Isotaxie-Index dieser Polypropylen-Homopolymerisate liegt im Bereich von 80 bis 99 %, vorzugsweise im Bereich von 90 bis 98 %. Die Homopolymerisate sind bekannt und beispielsweise herstellbar durch das in der DE-A-3730022 beschriebene Polymerisationsverfahren.

Besonders bevorzugt sind Propylen-Homopolymerisate mit einer Molmassenverteilung M_{w} : Mₙ im Bereich von 3 bis 5 und einem Schmelzindex MFI 230 °C/2,16 kg im Bereich von 10 bis 12 g/10 min (DIN 53 735).

Geeignete Propylen-Homopolymerisate sind beispielsweise erhältlich unter der Handelsbezeichnung Novolen® 1100 N und Novolen® 1125 N (BASF AG).

Die beschriebenen thermoplastischen Polypropylen-Kunststoffolien können noch übliche Additive, wie z.B. innere und äußere Gleitmittel, Antiblockmittel, Stabilisatoren, Antioxidantien, Pigmente, Kristallisationshilfsmittel und dergleichen enthalten. Diese Additive werden in den für die Herstellung, Verarbeitung, Konfektionierung und Anwendung notwendigen Mengen in Form von Pulver, Puder, Perlen oder direkt in dem Polymer eingearbeitet eingesetzt. Nähere Angaben zu den üblicherweise eingesetzten Mengen und Beispiele für geeignete Additive sind beispielsweise dem Buch Gächter-Müller, Kunststoffadditive, Carl-Hanser Verlag zu entnehmen.

Besonders vorteilhaft ist es, wenn die thermoplastische Polypropylenfolien bis zu 0,5 Gew.-%, bezogen auf das Gesamtgewicht der Folie, Erucasäureamid und/oder Ölsäureamid als Gleitmittel sowie bis zu 0,2 Gew.-%; bezogen auf das Gesamtgewicht der Kunststoffolie, Antiblockmittel, vorzugsweise Siliciumdioxid, sowie ggf. Antioxidantien und ggf. weitere Verarbeitungsstabilisatoren enthalten.

Als Antioxidantien werden bevorzugt Phenolderivate verwendet. Weitere geeignete Additive sind Titandioxid, Calciumcarbonat, Diatomeenerde, Calciumstearat sowie primäre und sekundäre Fettsäureamide. Als UV-Stabilisatoren werden beispielsweise UV-Stabilistoren vom HALS-Typ eingesetzt.

Die zwischen der Polypropylenträgerfolie und dem Metall angeordnete Haftvermittlerschicht kann ebenfalls die zuvor genannten Additive enthalten. Bevorzugt werden diese jedoch in die Polypropylenträgerfolie eingearbeitet.

Die Herstellung der Kunststoffolie-Haftvermittler-Metall-Verbunde ist ein allgemein bekanntes Verfahren. Es wird dabei so vorgegangen, daß zunächst der thermoplastische Kunststoff für die Trägerfolie und der Haftvermittler zusammen coextrudiert werden. Das Metallblech wird dann mit der hergestellten Coexfolie derart bedeckt, daß die Haftvermittlerschicht des Verbundes die Metalloberfläche berührt. Durch Anwendung von Druck und Wärme wird entweder mittels einer temperierbaren Presse oder im Walzenspalt eines Walzwerkes oder Kalanders mittels temperierbarer Walzen der Poypropylenfolie-Haftvermittler-Metall-Verbund hergestellt. Der Druck und die Temperatur sind dabei so zu wählen, daß einerseits der Haftvermittler eine feste und stabile Verbindung mit der Metallfolie bzw. dem Metallblech eingeht und daß andererseits die thermoplastische Kunststoffschicht nicht aufschmilzt.

Die Beschichtung des Metallblechs bzw. die thermoplastische Verbundfolie weist im allgemeinen eine Gesamttrockenfilmstärke von weniger als 15 µm, bevorzugt 10 bis 14 µm. Die Stärke der Haftvermittlerschicht liegt dabei zwischen 0,5 und 100 µm. Die Stärke der Polypropylenfolienschicht ergibt sich entsprechend zu Werten zwischen 10 und 499,5 µm. Wie bereits erwähnt, sind thermoplastische Verbundfolien einsetzbar, die nur aus einer Haftvermittler- und einer Deckschicht bestehen, es sind aber auch Verbundfolien aus mehreren Schichten einsetzbar. In diesem Fall können die verschiedenen thermoplastischen Schichten aus jeweils gleichem oder aber verschiedenem Material in gleicher oder unterschiedlicher Schichtdicke bestehen.

Abschließend sei noch darauf hingewiesen, daß es auch möglich ist, das Metallblech an der dem Füllgut abgewandten Seite ebenfalls mit einer bevorzugt planebenen, thermoplastischen Verbundfolie oder aber mit einem flüssigen oder pulverförmigen Beschichtungsmittel zu beschichten.

Die in der beschriebenen Weise hergestellten Polypropylendeckschicht-Haftvermittler-Metall-Verbunde werden zur Herstellung von Verpackungsbehältern eingesetzt, und zwar insbesondere zur Herstellung von Böden bzw. Deckeln von Dosen, Ventiltellern von Aerosoldosen sowie von Verschlüssen. Die Herstellung der Verschlußteile erfolgt nach den üblichen Methoden (vgl. beispielsweise VR-INTERPACK 1969, Seiten 600 - 606: W. Panknin, A. Breuer, M. Sodeik, "Abstreckziehen als Verfahren zum Herstellen von Dosen aus Weißblech", SHEET METAL INDUSTRIES, August 1976: W. Panknin, CH. Schneider, M. Sodeik, "Plastic Deformation of Tinplate in Can Manufacturing"; Verpackungs-Rundschau, Heft 4/1971, Seiten 450 - 458: M. Sodeik, I. Siewert,' "Die nahtlose Dose aus Weißblech"; Verpackungs-Rundschau, Heft 11/1975, Seiten 1402 - 1407: M. Sodeik, K. Haaß, I. Siewert, "Herstellen von Dosen aus Weißblech durch Tiefziehen", Arbeitsmappe für den Verpackungspraktiker, Metalle, Teil II, Gruppe 2, Weißblech, Lfd. Nr. 220.042 bis 220.048 in neue Verpackung 12/87, Seite B 244 bis B 246 und neue Verpackung 1/88, Seiten B 247 bis B 250).

Bezüglich näherer Einzelheiten wird daher auf die Literatur verwiesen.

Die erfindungsgemäßen Polypropylenfolie-Haftvermittler-Metall-Verbunde zeigen praktisch keinen Weißbruch mehr, desweiteren sind die Haftungen zwischen dem Metall und dem Haftvermittler einerseits und der Polypropylen-Kunststoffolie und dem Haftvermittler andererseits außerordentlich gut. Die Polypropylendeckschichten schützen das Metall sehr gut vor dem Angriff des Füllgutes, wobei eine Beeinflussung des Füllgutes durch Korrosionsprodukte des Metalles ebenfalls verhindert wird. Eine Beeinträchtigung des Füllgutes durch herausgelöste Bestandteile der Polypropylendeckschichtfolie ist bei Sterilisation und Lagerung der verpackten Güter nicht festzustellen.

## Patentansprüche

1. Pulverlack für die Innen-Beschichtung von Verpackungsbehälterr mit eines Schichtdicke von ≤ 15 µm, **dadurch gekennzeichnet, daß**
1) der Pulverlack
A) mindestens einen thermoplastischen Kunststoff, ausgewählt aus der Gruppe, bestehend aus Polyurethanen, Polyethylenen und Polyamiden.
B) ggf. mindestens einen duroplastischen Kunststoff, vorzugsweise ein Epoxidharz mit einem Epoxyäquivalentgewicht von 400 bis 3000,
C) ggf. Pigmente, Füller, Katalysatoren, pulverlacktypische Additive wie Entgasungsmittel, Verlaufsmittel. Radikalfänger. Antioxidantien
enthält und
2) der Pulverlack eine derartige Korngrößenverteilung aufweist, daß
a) mindestens 90 Massenprozent der Pulverlackteilchen eine Teilchengröße zwischen 1 und 120 µm aufweisen,
b) die maximale Teilchengröße der Pulverlackteilchen für mindestens 99 Massenprozent der Teilchen ≤ 150 µm beträgt und
c) die mittlere Teilchengröße der Pulverlackteilchen zwischen 1 bis 60 µm, vorzugsweise 1 und 30 µm liegt.

2. Pulverlack nach Anspruch 1,
**dadurch gekennzeichnet, daß** er eine derartige Korngrößenverteilung aufweist, daß
a) mindestens 90 Massenprozent der Pulverlackteilchen eine Teilchengröße zwischen 1 und 40 µm aufweisen,
b) die maximale Teilchengröße der Pulverlackteilchen für mindestens 99 Massenprozent der Teilchen ≤ 60 µm beträgt und
c) die mittlere Teilchengröße der Pulverlackteilchen zwischen 2 und 12 µm liegt.

3. Pulverlack nach Anspruch 1,
**dadurch gekennzeichnet, daß** er eine derartige Korngrößenverteilung aufweist, daß
a) mindestens 90 Massenprozent der Pulverlackteilchen eine Teilchengröße zwischen 5 und 25 µm aufweisen,
b) die maximale Teilchengröße der Pulverlackteilchen für mindestens 99 Massenprozente der Teilchen ≤ 40 µm beträgt und
c) die mittlere Teilchengröße der Pulverlackteilchen zwischen 2 und 12 µm liegt.

4. Pulverlack nach einem der Ansprüche 1 bis 3,
**dadurch gekennzeichnet, daß** er
A) 65 bis 80 Gew.-%, vorzugsweise 70 bis 80 Gew.-% bezogen auf das Gesamtgewicht des Pulverlacks, der Komponente A,
B) 20 bis 10 Gew.-%, vorzugsweise 15 bis 10 Gew.-% bezogen auf das Gesamtgewicht des Pulverlacks der Komponente B und
C) 15 bis 10 Gew.-% bezogen auf das Gesamtgewicht des Pulverlacks, der Komponente C enthält.

5. Pulverlack nach einem der Ansprüche 1 bis 4,
**dadurch gekennzeichnet, daß** er eine Glasübergangstemperatur von
> 40 ° C aufweist.

6. Schichtstoff zur Herstellung von Verpackungsbehältern,
**dadurch gekennzeichnet, daß** er aus einem Substrat, vorzugsweise aus Metall, einem darauf aufgebrachten Pulverlack nach einem der Ansprüche 1 bis 5 und ggf. einer darauf geschichteten Kunststoffolie, vorzugsweise aus Polypropylen besteht.

7. Verfahren zur Herstellung eines Pulverlacks für die Innen-Beschichtung von Verpackungsbehältern, mit einer Schichtdicke von ≤ 15µm
**dadurch gekennzeichnet, daß** mindestens je ein Polyurethan mit einer Shore-A-Härte von 70 bis 95 und einer Shore-D-Härte von 54 bis 80 vermahlen werden, bei der
a) mindestens 90 Massenprozent der Pulverlackteilchen eine Teilchengröße zwischen 1 und 120 µm aufweisen,
b) die maximale Teilchengröße der Pulverlackteilchen für mindestens 99 Massenprozent der Teilchen ≤ 150 µm beträgt und
c) die mittlere Teilchengröße der Pulverlackteilchen zwischen 1 und 30 µm liegt.

8. Verfahren nach Anspruch 7,
**dadurch gekennzeichnet, daß** auf eine Korngröße vermahlen wird, bei der
a) mindestens 90 Massenprozent der Pulverlackteilchen eine Teilchengröße zwischen 1 und 40 µm aufweisen,
b) die maximale Teilchengröße der Pulverlackteilchen für mindestens 99 Massenprozent der Teilchen ≤ 60 µm beträgt und
c) die mittlere Teilchengröße der Pulverlackteilchen zwischen 2 und 12 µm liegt.

9. Verfahren nach Anspruch 7,
**dadurch gekennzeichnet, daß** auf eine Korngröße vermahlen wird, bei der
a) mindestens 90 Massenprozent der Pulverlackteilchen eine Teilchengröße zwischen 5 und 25 µm aufweisen,
b) die maximale Teilchengröße der Pulverlackteilchen für mindestens 99 Massenprozente der Teilchen ≤ 40 µm beträgt und
c) die mittlere Teilchengröße der Pulverlackteilchen zwischen 2 und 12 µm liegt.

10. Verfahren nach einem der Ansprüche 7 bis 9,
**dadurch gekennzeichnet, daß** nach dem Vermahlen 15 bis 10 Gew.-% bezogen auf das Gesamtgewicht des Pulverlacks, Pigmente, Füller, Katalysatoren, pulverlacktypische Additive wie Entgasungsmittel, Verlaufsmittel, Radikalfänger, Antioxidantien zugesetzt werden.

11. Verfahren zur Beschichtung von Verpackungsbehältern nach einem der Ansprüche 7 bis 10
**dadurch gekennzeichnet, daß** auf ein Substrat, vorzugsweise aus Metall, der Pulverlack aufgebracht wird, auf den Pulverlack eine Kunststoffolie, vorzugsweise aus Polypropylen aufgetragen und anschließend der Verpackungsbehälter ausgeformt wird.

12. Verwendung der Pulverlacke nach einem der Ansprüche 1 bis 5 zur Innen-beschichtung von Verpackungsbehältern mit einer Schichtdicke von ≤ 15 µm.

13. Verwendung des Schichtstoffs nach Anspruch 6 zur Herstellung von Verpackungsbehältern.

## Claims

1. Powder coating composition for coating the insides of packaging containers at a coating thickness of ≤ 15 µm,
**characterized in that**
(1) the powder coating composition comprises
(A) at least one thermoplastic selected from the group consisting of polyurethanes, polyethylenes, and polyamides;
(B) optionally, at least one thermosetting plastic, preferably an epoxy resin having an epoxy equivalent weight of from 400 to 3,000;
(C) optionally, pigments, fillers, catalysts, additives typical for powder coatings, such as degasification agents, flow control agents, radical interceptors, antioxidants;
and
(2) the particle size distribution of the powder coating composition is such that
(a) at least 90 mass percent of the powder coating particles have a particle size of between 1 and 120 µm;
(b) the maximum particle size of the powder coating particles is ≤ 150 µm for at least 99 mass percent of the particles; and
(c) the mean particle size of the powder coating particles is between 1 and 60 µm, preferably between 1 and 30 µm.

2. Powder coating composition according to claim 1,
**characterized in that**
its particle size distribution is such that
(a) at least 90 mass percent of the powder coating particles have a particle size of between 1 and 40 µm;
(b) the maximum particle size of the powder coating particles is ≤ 60 µm for at least 99 mass percent of the particles; and
(c) the mean particle size of the powder coating particles is between 2 and 12 µm.

3. Powder coating composition according to claim 1,
**characterized in that**
its particle size distribution is such that
(a) at least 90 mass percent of the powder coating particles have a particle size of between 5 and 25 µm;
(b) the maximum particle size of the powder coating particles is ≤ 40 µm for at least 99 mass percent of the particles; and
(c) the mean particle size of the powder coating particles is between 2 and 12 µm.

4. Powder coating composition according to any of claims 1 to 3.
**characterized in that** it comprises
(A) 65 to 80 weight percent, preferably 70 to 80 weight percent, based on the total weight of the powder coating, of component A;
(B) 20 to 10 weight percent, preferably 15 to 10 weight percent, based on the total weight of the powder coating, of component B; and
(C) 15 to 10 weight percent, based on the total weight of the powder coating, of component C.

5. Powder coating composition according to any of claims 1 to 4,
**characterized in that**
it has a glass transition temperature of > 40°C.

6. Laminate for the production of packaging containers,
**characterized in that**
it consists of a substrate, preferably made of metal, a powder coating according to any of claims 1 to 5 deposited thereon, and optionally a plastic foil layered thereon, preferably made of polypropylene.

7. Process for the preparation of a powder coating composition for coating the insides of packaging containers at a coating thickness of ≤ 15 µm,
**characterized in that**
at least one polyurethane each, having a Shore A hardness of from 70 to 95 and a Shore D hardness of from 54 to 80, are ground, wherein
(a) at least 90 mass percent of the powder coating particles have a particle size of between 1 and 120 µm;
(b) the maximum particle size of the powder coating particles is ≤ 150 µm for at least 99 mass percent of the particles; and
(c) the mean particle size of the powder coating particles is between 1 and 30 µm.

8. Process according to claim 7,
**characterized in that**
grinding leads to a particle size, wherein
(a) at least 90 mass percent of the powder coating particles have a particle size of between 1 and 40 µm;
(b) the maximum particle size of the powder coating particles is ≤ 60 µm for at least 99 mass percent of the particles; and
(c) the mean particle size of the powder coating particles is between 2 and 12 µm.

9. Process according to claim 7,
**characterized in that**
grinding leads to a particle size, wherein
(a) at least 90 mass percent of the powder coating particles have a particle size of between 5 and 25 µm;
(b) the maximum particle size of the powder coating particles is ≤ 40 µm for at least 99 mass percent of the particles; and
(c) the mean particle size of the powder coating particles is between 2 and 12 µm.

10. Process according to any of claims 7 to 9,
**characterized in that**,
after grinding, 15 to 10 weight percent, based on the total weight of the powder coating, of pigments, fillers, catalysts, additives typical for powder coatings, such as degasification agents, flow control agents, radical interceptors, antioxidants are being added.

11. Process for the coating of packaging containers according to any of claims 7 to 10,
**characterized in that**
the powder coating is deposited on a substrate, preferably made of metal, a plastic foil, preferably made of polypropylene, is optionally layered on the powder coating, and subsequently the packaging container is formed.

12. Use of the powder coatings according to any of claims 1 to 5 for coating the insides of packaging containers at a coating thickness of ≤ 15 µm.

13. Use of the laminate according to claim 6 for the production of packaging containers.

## Revendications

1. Peinture en poudre pour le revêtement intérieur de boîtes de conditionnement, d'une épaisseur de couche ≤ 15 µm,
**caractérisée en ce que**
1) la peinture en poudre contient
A) au moins un plastique thermoplastique, choisi dans le groupe formé par des polyuréthannes, des polyéthylènes et des polyamides,
B) éventuellement au moins un plastique thermodurcissable, de préférence une résine époxy, ayant un équivalent-poids d'époxy de 400 à 3000,
C) éventuellement des pigments, des matières de remplissage, des catalyseurs, des additifs usuels pour les peintures, comme des agents de dégazage, des agents de fluidité, des capteurs de radicaux, des antioxydants,
et
2) la peinture en poudre présente une distribution de taille des particules telle que
a) au moins 90% en masse des particules de la peinture en poudre présentent une taille de articules entre 1 et 120 µm,
b) la taille maximale de particule des particules de la peinture en poudre est ≤ 150 µm pour au moins 99% en masse des particules, et
c) la taille moyenne de particules des particules de la peinture en poudre est de 1 à 60, de préférence de 1 à 30 µm.

2. Peinture en poudre selon la revendication 1, **caractérisée en ce qu'**elle présente une distribution de taille de particules telle que
a) au moins 90% en masse des particules de peinture en poudre présentent une taille de particule entre 1 et 40 µm,
b) la taille maximale de particule des particules de la peinture en poudre est ≤ 60 µm pour au moins 99% en masse des particules, et
c) la taille moyenne de particules des particules de la peinture en poudre est de 2 à 12 µm.

3. Peinture en poudre selon la revendication 1, **caractérisée en ce qu'**elle présente une distribution de taille de particules telle que
a) au moins 90% en masse des particules de peinture en poudre présentent une taille de particule entre 5 et 25 µm,
b) la taille maximale de particule des particules de la peinture en poudre est ≤ 40 µm pour au moins 99% en masse des particules, et
c) la taille moyenne de particules des particules de la peinture en poudre est de 2 à 12 µm.

4. Peinture en poudre selon l'une des revendications 1 à 3, **caractérisée en ce qu'**elle contient
A) de 65 à 80%, de préférence de 70 à 80% en poids, par rapport au poids total de la peinture en poudre, du composant A,
B) de 20 à 10% en poids, de préférence de 15 à 10% en poids, par rapport au poids total de la peinture en poudre, du composant B, et
C) de 15 à 10% en poids, par rapport au poids total de la peinture en poudre, du composant C.

5. Peinture en poudre selon l'une des revendications 1 à 4, **caractérisée en ce qu'**elle présente une température de transition vitreuse de > 40°C.

6. Matériau de revêtement pour la production de boîtes de conditionnement, **caractérisé en ce qu'**il est constitué d'un substrat, de préférence en métal, d'une peinture en poudre appliquée sur ce dernier selon l'une des revendications 1 à 5 et éventuellement d'une feuille de plastique appliquée par-dessus, de préférence en polypropylène.

7. Procédé de préparation d'une peinture en poudre pour le revêtement intérieur de boîtes de conditionnement , ayant une épaisseur ≤ 15 µm, **caractérisé en ce que** l'on broie au moins un polyuréthanne d'une dureté Shore A de 70 à 95 et d'une dureté Shore D de 54 à 80, où
a) au moins 90% en masse des particules de la peinture en poudre présentent une taille de particules entre 1 et 120 µm,
b) la taille maximale de particule des particules de la peinture en poudre est ≤ 150 µm pour au moins 99% en masse des particules, et
c) la taille moyenne de particules des particules de la peinture en poudre est de 1 à 30 µm.

8. Procédé selon la revendication 7, **caractérisé en ce que** l'on opère le broyage à une granulométrie telle que
a) au moins 90% en masse des particules de peinture en poudre présentent une taille de particule entre 1 et 40 µm,
b) la taille maximale de particule des particules de la peinture en poudre est ≤ 60 µm pour au moins 99% en masse des particules, et
c) la taille moyenne de particules des particules de la peinture en poudre est de 2 à 12 µm.

9. Procédé selon la revendication 7, **caractérisé en ce que** l'on opère le broyage à une granulométrie telle que
a) au moins 90% en masse des particules de peinture en poudre présentent une taille de particule entre 5 et 25 µm,
b) la taille maximale de particule des particules de la peinture en poudre est ≤ 40 µm pour au moins 99% en masse des particules, et
c) la taille moyenne de particules des particules de la peinture en poudre est de 2 à 12 µm.

10. Procédé selon l'une des revendications 7 à 9, **caractérisé en ce qu'**après le broyage, on ajoute de 15 à 10% en poids, par rapport au poids total de la peinture en poudre, de pigments, de charges, de catalyseurs, d'additifs typiques pour les peintures en poudre, comme des agents de dégazage, des agents de fluidité, des capteurs de radicaux, des antioxydants.

11. Procédé de revêtement de boîtes de conditionnement selon l'une des revendications 7 à 10, **caractérisé en ce que** la peinture en poudre est appliquée sur un substrat, de préférence en métal, que l'on applique sur la peinture en poudre une feuille de plastique, de préférence en polypropylène, et que l'on démoule ensuite la boîte de conditionnement.

12. Utilisation de la peinture en poudre selon l'une des revendications 1 à 5 pour le revêtement intérieur de boîtes de conditionnement, d'une épaisseur de couche ≤ 15 µm.

13. Utilisation du matériau de revêtement selon la revendication 6 pour la production de boîtes de conditionnement.
